(19) **Europäisches Patentamt / European Patent Office / Office européen des brevets**

(11) **EP 4 647 187 A1**

(12) # EUROPEAN PATENT APPLICATION
published in accordance with Art. 153(4) EPC

(43) Date of publication:
**12.11.2025 Bulletin 2025/46**

(21) Application number: **25737990.9**

(22) Date of filing: **12.03.2025**

(51) International Patent Classification (IPC):
**B21B 1/38** (2006.01)

(52) Cooperative Patent Classification (CPC):
**B21B 1/38; B21B 3/00**

(86) International application number:
**PCT/CN2025/082014**

(87) International publication number:
**WO 2025/190305 (18.09.2025 Gazette 2025/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2024 CN 202410292688**

(71) Applicants:
• **Jiangsu Kangrui New Material Technology Co., Ltd.**
  **Jiangyin City, Wuxi, Jiangsu 214400 (CN)**

• **Kangrui New Materials Technology (Nantong) Co., Ltd.**
  **Nantong, Jiangsu 216500 (CN)**

(72) Inventors:
• **LI, Pengfei**
  **Wuxi, Jiangsu 214400 (CN)**
• **ZHANG, Zhong**
  **Wuxi, Jiangsu 214400 (CN)**
• **CUI, Dong**
  **Wuxi, Jiangsu 214400 (CN)**

(74) Representative: **Bardehle Pagenberg S.L.**
  **Avenida Diagonal 598, 3o, 1a**
  **08021 Barcelona (ES)**

(54) # PREPARATION METHOD FOR TITANIUM-ALUMINUM-MAGNESIUM METAL LAMINATED COMPOSITE COILED MATERIAL

(57) The present invention provides a method for making a titanium aluminum magnesium metal layered composite coil, which relates to the technical field of metal compositing. A titanium material layer, an aluminum material layer, and a magnesium material layer are successively laminated to form a laminated material, and the laminated material is heated to a first preset temperature by a heating furnace; there is a heat transfer gap between the titanium material layer and the aluminum material layer and/or the aluminum material layer and the magnesium material layer; the heated laminated material is conveyed to a rolling equipment for composite hot rolling. According to the method for making a titanium aluminum magnesium metal layered composite coil provided in the present invention, heat transfer can be regulated by arranging a heat transfer gap between a titanium material layer and an aluminum material layer and/or between an aluminum material layer and a magnesium material layer. Due to the arrangement of the heat transfer gap, when heating the laminated material, a heat convection is formed in the heat transfer gap by means of the heat transfer gap, allowing the heat in the heating furnace to circulate and flow into the heat transfer gaps, resulting in a more even temperature distribution at the edges and inside of the raw materials, and allowing the surfaces of each raw material to be uniformly heated.

FIG. 1

EP 4 647 187 A1

**Description**

TECHNICAL FIELD

The present invention relates to the technical field of metal composite, and in particular to a method for making a titanium aluminum magnesium metal layered composite coil.

BACKGROUND ART

With the development of science and technology, the demand for metal materials is becoming higher and higher. Traditional single metal materials have been difficult to meet the application requirements of modern industry, and people urgently seek a material that has the physical and chemical properties of a variety of metal materials to promote the progress of human society. As a result, metal layered composites have arisen. Metal layered composite refers to a novel composite produced by metallurgical bonding of the same or different metal materials at the interface using certain physical and chemical methods (such as rolling composite, explosive welding, extrusion composite, and diffusion bonding, etc.).

Titanium, aluminum, magnesium, and their alloys are currently the most widely used light metal materials in the engineering field. Titanium and its alloys are rare metal materials that are lightweight, high-strength, wear-resistant, and corrosion-resistant. They are known as "space metals" and "ocean metals" and are widely used in aerospace and high corrosion-resistant chemical industries. However, the production of titanium and titanium alloys requires high energy consumption and costs, and the production process is accompanied by the emission of chlorine-containing pollutants, resulting in the high price of titanium alloys and limiting their application. Aluminum has the characteristics of lightweight, good electrical conductivity, corrosion resistance, beautiful appearance, and low cost. Especially, the alloyed high-strength aluminum alloy has been used as an aerospace material. Magnesium metal has the characteristics of low density, good electromagnetic protection, good shock absorption, and impact resistance. Its alloy has the excellent properties of high specific strength, high specific stiffness, and so on, and is difficult to be replaced by many other metals. It is widely used in the field of aviation electromagnetic shielding and shock absorption.

Compared with single metal material, metal layered composite has better impact resistance, fatigue resistance, and corrosion resistance, which combines the excellent properties of raw materials. In addition, through reasonable structural design and later process treatment, the layered composites can also achieve the purpose of reducing production costs and energy conservation by reducing the content of precious metals and high-density metals.

In prior art, Application No. CN202011519856.1 discloses a method for preparing an ultra-thin aluminum magnesium layered composite. The preparation method comprises pressing and forming an aluminum alloy powder and a magnesium alloy powder, presintering, composite rolling, and a post-treatment process. When the aluminum alloy powder is presintered after being pressed and formed, the temperature is controlled to be 500-630°C, and time is larger than or equal to 60 minutes; when the magnesium alloy powder is presintered after being pressed and formed, the temperature is controlled to be 500-630°C, and time is larger than or equal to 60 minutes. During the composite rolling, the temperature is controlled to be 270-450°C, preferably 275-350°C, and during the composite rolling, single-pass rolling reduction is 30-80%. When the composite rolling temperature is lower than 310°C, the single-pass rolling reduction is 40-80%. The disadvantage of this method is that the layered composite is produced through powder sintering, wherein the composite ingot needs to be formed first and then rolled twice. The process is long and the energy consumption is large due to the second heating rolling. In addition, due to the significant differences in physical and chemical properties between titanium, aluminum, and magnesium, the plasticity of titanium is good at 600°C, while the grain coarsening of magnesium and aluminum occurs at temperatures greater than 400°C. If the composite ingot is first formed by powder pressing, titanium has good plasticity at a high temperature of 600°C. At the same time, brittle intermetallic compounds may form, affecting the bonding strength. At high temperatures, titanium and aluminum are prone to the formation of brittle phases such as $TiAl_3$ and $Ti_3Al$; magnesium reacts with titanium to form $MgTi_2$, which significantly weakens the interface toughness and affects the product quality. In addition, it takes the form of forming a composite ingot, and it is also impossible to form a strip-shaped composite in the form of a coil in the subsequent rolling. In view of the above, there is a need for a method for making a titanium aluminum magnesium metal layered composite coil to solve the above problems.

SUMMARY OF THE INVENTION

The present invention provides a method for making a titanium aluminum magnesium metal layered composite coil to solve the problems of poor interfacial toughness and inability to form a coil in the conventional metal layered composite.

The present invention provides a method for making a titanium aluminum magnesium metal layered composite coil including:

laminating a titanium material layer, an aluminum material layer, and a magnesium material layer successively to form a laminated material, heating the laminated material to the first preset temperature by a heating furnace, wherein there is a heat transfer gap between the titanium material layer and the aluminum material layer and/or the aluminum material layer and the magnesium material layer;

conveying the heated laminated material to a rolling equipment for composite hot rolling. According to the method for making a titanium aluminum magnesium metal layered composite coil of the present invention, a temperature sensor is provided in the heating furnace and is configured to sense a temperature in the heat transfer gap.

According to the method for making a titanium aluminum magnesium metal layered composite coil of the present invention, the heat transfer gap is gradually reduced from entering the heating furnace to the rolling equipment.

According to the method for making a titanium aluminum magnesium metal layered composite coil of the present invention, the first preset temperature is 250-600°C.

According to the method for making a titanium aluminum magnesium metal layered composite coil of the present invention, a heat insulation cover is provided between an outlet of the heating furnace and the rolling equipment.

According to the method for making a titanium aluminum magnesium metal layered composite coil of the present invention, a heating device is provided in the heat insulation cover for reheating the edges of the laminated material.

According to the method for making a titanium aluminum magnesium metal layered composite coil of the present invention, a first groove is formed in a side of the magnesium material layer after rolling; the aluminum material layer is embedded in the first groove; a second groove is formed in a side of the aluminum material layer facing away from the magnesium material layer, and the titanium material layer is embedded in the second groove.

According to the method for making a titanium aluminum magnesium metal layered composite coil of the present invention, before the step of laminating a titanium material layer, an aluminum material layer, and a magnesium material layer successively to form a laminated material, the method further includes:

roughening the titanium material layer, the aluminum material layer, and the magnesium material layer so as to form roughened stripes on the surface; and

washing the titanium material layer, the aluminum material layer, and the magnesium material layer after the roughening treatment to remove attachments on the surface.

According to the method for making a titanium aluminum magnesium metal layered composite coil of the present invention, the roughened stripes form a predetermined included angle with the lengthwise direction of the laminated material; the predetermined included angle is 10-15°; the roughened stripes between the laminated surfaces of two adjacent materials are arranged in parallel; the thickness variation of the titanium material layer, the aluminum material layer, and the magnesium material layer after roughening is controlled within $\pm$ 0.05 mm.

According to the method for making a titanium aluminum magnesium metal layered composite coil of the present invention, the laminated material is subjected to an argon gas atmosphere in both the heating furnace and the heat insulation cover, and the temperature fluctuation in the heating furnace is controlled within $\pm$ 10°C.

According to the method for making a titanium aluminum magnesium metal layered composite coil of the present invention, the laminated material is rolled in the rolling equipment using an asynchronous speed ratio to obtain a composite metal strip; wherein a lower roller of the rolling equipment is used for rolling the magnesium material layer, an upper roller of the rolling equipment is used for rolling the titanium material layer, and the ratio of the linear velocity $V_1$ of the lower roller to the linear velocity $V_2$ of the upper roller is 1.05-1.3: 1; during rolling, the reduction is 20-50% and the output speed of the composite metal strip is 5-13 m/min.

According to the method for making a titanium aluminum magnesium metal layered composite coil of the present invention, prior to the step of roughening the titanium material layer, the aluminum material layer, and the magnesium material layer, the method further includes:

deoiling and cleaning the titanium material layer, the aluminum material layer, and the magnesium material layer.

According to the method for making a titanium aluminum magnesium metal layered composite coil of the present invention, prior to the step of conveying the heated laminated material to a rolling equipment for composite hot rolling, the method further includes:

preheating the rollers of the rolling equipment to ensure that the temperature of the rollers is $\geq$ 60°C.

According to the method for making a titanium aluminum magnesium metal layered composite coil of the present invention, while performing the step of conveying the heated laminated material to a rolling equipment for composite hot rolling, the method further includes:

applying a lubricant to a contact surface of the laminated material and the rollers during rolling; and

when the temperature of the rollers reaches 85°C during rolling, cooling the rollers.

According to the method for making a titanium aluminum magnesium metal layered composite coil of the present invention, the circular run-out of the upper roller is within ± 0.05 mm, and the deviation of the center hole of the upper roller is within ± 0.02 mm.

According to the method for making a titanium aluminum magnesium metal layered composite coil provided in the present invention, heat transfer can be regulated by arranging a heat transfer gap between a titanium material layer and an aluminum material layer, and/or between an aluminum material layer and a magnesium material layer. Due to the arrangement of the heat transfer gap, when heating the laminated material, a heat convection is formed in the heat transfer gap by means of the heat transfer gap, allowing the heat in the heating furnace to circulate and flow into the heat transfer gaps, resulting in a more even temperature distribution at the edges and inside of the raw materials, and allowing the surfaces of each raw material to be uniformly heated.

BRIEF DESCRIPTION OF THE DRAWINGS

In order to more clearly illustrate the technical solutions of the present invention or the prior art, a brief description will be given below of the embodiments or the accompanying drawings that are required to be used in the description of the prior art. It is obvious that the drawings in the description below are some embodiments described in the present invention, and it would be obvious for a person skilled in the art to obtain other drawings according to these drawings without involving any inventive effort.

FIG. 1 is a schematic diagram of a method for making the titanium aluminum magnesium metal layered composite coil provided by the present invention.

FIG. 2 is a schematic diagram of the structural relationship between the titanium material layer, aluminum material layer, and magnesium material layer provided by the present invention.

Reference numerals:
110, titanium material layer; 120, aluminum material layer; 130, magnesium material layer; 200, heating furnace; 300, rolling equipment; 400, heat insulation cover.

DETAILED DESCRIPTION OF THE INVENTION

In order to clarify the purpose, technical solution, and advantages of the present invention, the following will provide a clear and complete description of the technical solutions in the present invention in conjunction with the accompanying drawings. Obviously, the described embodiments are a part of the embodiments of the present invention, not the entire embodiment. Based on the embodiments of the present invention, all other embodiment obtained by a person of ordinary skill in the art without inventive effort fall within the scope of the present invention. In the description of the present invention, it should be noted that the terms "central", "longitudinal", "transverse", "upper", "lower", "front", "rear", "left", "right", "vertical", "horizontal", "top", "bottom", "inner", "outer", and the like, indicate the orientation or positional relationship based on the orientation or positional relationship shown in the accompanying drawings, which are only for the convenience of describing the embodiment of the present invention and simplifying the description, rather than indicating or implying that the referenced devices or elements must have a particular orientation, be constructed and operated in a particular orientation, and thus should not be construed as limiting the embodiment of the present invention. Furthermore, the terms "first", "second", and "third" are used for descriptive purposes only and are not to be construed as indicating.

In the description of the embodiments of the present invention, it should be noted that unless otherwise specified and limited, the terms "connected" and "connect" should be broadly understood, for example, they can be fixed connections, detachable connections, or integral connections. It can be a mechanical connection or an electrical connection. It can be directly connected or indirectly connected through an intermediate medium. The specific meaning of the above terms in the embodiment of the present invention can be understood in detail by those skilled in the art.

In embodiments of the present invention, unless expressly specified or limited otherwise, a first feature being "on" or "under" a second feature can be a direct contact between the first and second features, or an indirect contact between the first and second features through an intermediate medium. Moreover, the first feature being "above" the second feature may indicate that the first feature is directly above or diagonally above the second feature, or simply that the height of the first feature is higher than that of the second feature. The first feature being "below" the second feature may indicate that the first feature is directly below or diagonally below the second feature, or simply that the height of the first feature is lower than that of the second feature.

In the description of this specification, references to descriptions of the terms "one embodiment", "some embodiments", "example", "specific examples", or "some examples", etc. mean that a particular feature, structure, material, or characteristic described in connection with the embodiment or example is included in at least one embodiment or example of the embodiments of the present invention. In this description, schematic representations of the terms above do not necessarily refer to the same embodiment or example. Furthermore, the particular features, structures, materials, or characteristics described may be combined in any suitable manner in any one or more embodiments or examples. Further, the different embodiments or examples and the features of the different embodiments or examples described in this description can be integrated and combined by a person skilled in the art without contradicting each other.

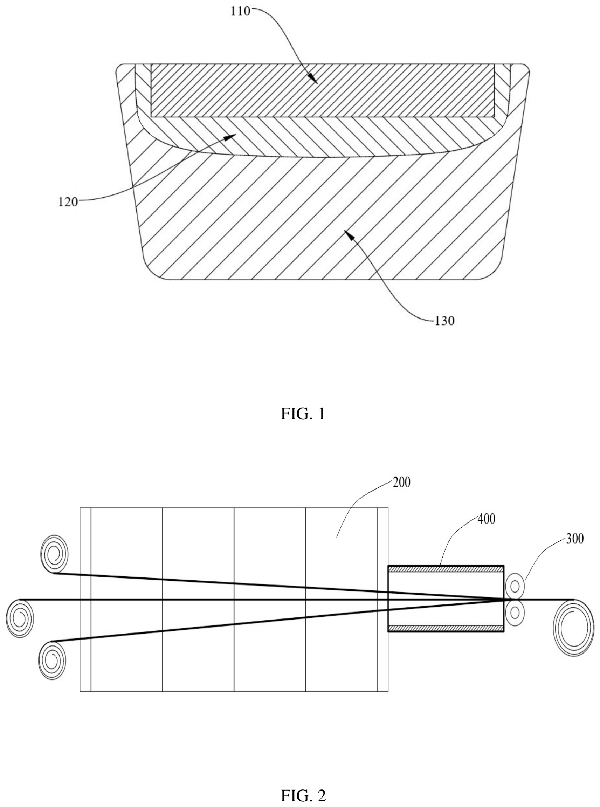

As shown in FIG. 2, a method for making a titanium aluminum magnesium metal layered composite coil includes: a titanium material layer 110, an aluminum material layer 120, and a magnesium material layer 130 are successively laminated to form a laminated material, and the laminated material is heated to a first preset temperature by a heating furnace 200. A heat transfer gap is provided between the titanium material layer 110 and the aluminum material layer 120, and/or the aluminum material layer 120 and the magnesium material layer 130.

The heated laminated material is conveyed to a rolling equipment 300 for composite hot rolling. Specifically, there are various embodiments in the preparation. Specifically, a heat transfer gap can be provided between the titanium material layer 110 and the aluminum material layer 120, and the aluminum material layer 120 is bonded to the magnesium material layer 130. As another example, the titanium material layer 110 is bonded to the aluminum material layer 120, and a heat transfer gap is provided between the aluminum material layer 120 and the magnesium material layer 130. Preferably, a first heat transfer gap is provided between the titanium material layer 110 and the aluminum material layer 120. A second heat transfer gap is provided between the aluminum material layer 120 and the magnesium material layer 130, i.e., heat transfer gaps are provided between adjacent materials. Heat transfer can be regulated by arranging a heat transfer gap between a titanium material layer 110 and an aluminum material layer 120, and/or between an aluminum material layer 120 and a magnesium material layer 130. Due to the arrangement of the heat transfer gap, when heating the laminated material, a heat convection is formed in the heat transfer gap by means of the heat transfer gap, allowing the heat in the heating furnace 200 to circulate and flow into the heat transfer gaps, resulting in a more even temperature distribution at the edges and inside of the raw materials, and allowing the surfaces of each raw material to be uniformly heated.

In an embodiment of the present invention, a temperature sensor is provided in the heating furnace 200 and is configured to sense the temperature in the heat transfer gap.

Further, the temperature sensor is provided with a display to display the interlayer temperature of the laminated material in real time. In use, the temperature sensor may be in the form of a thermocouple, or may be an infrared thermometer, a double-sided infrared thermometer, or the like.

In an embodiment of the present invention, the heat transfer gap is gradually reduced from entering the heating furnace 200 to the rolling equipment 300. In production, the inlet end of the heating furnace 200 is an unwinding end of the raw materials. Each raw material is guided by guide rollers in the heating furnace 200 to travel inside the heating furnace 200, and the heat transfer gap between different raw materials is adjusted by changing the spacing of the guide rollers. The laminated material is heated in the heating furnace 200 to a first preset temperature, wherein the first preset temperature is 250°C-600°C. Preferably, the temperature of the laminated material is heated to not more than 400±20°C. The heat transfer gap of the raw material is gradually reduced as the material progresses, and the material layers are adhered to each other in a roller and roll-compounded to form a titanium aluminum magnesium composite.

In an embodiment of the present invention, a heat insulation cover 400 is provided between the outlet of the heating furnace 200 and the rolling equipment 300.

When the aluminum material layer 120 and the magnesium material layer 130 come out of the heating furnace 200 and enter the rolling equipment 300, the aluminum material layer 120 and the magnesium material layer 130 leave the temperature field inside the heating furnace 200 and come into contact with indoor air, and because the aluminum material layer 120 and the magnesium material layer 130 are rolled and produced in the form of strip-shaped coil, the temperature drop rate thereof is faster. In actual production, the aluminum raw material used is aluminum 6013, which has a thermal conductivity of 237 W/(m·K), a specific heat of 0.88 x 10 ^ 3 J/(kg ·°C), and a density of 2.71 g/cm$^3$. The magnesium raw material used is magnesium AZ91D, which has a thermal conductivity of 72 W/Mk, a specific heat of 0.25 x 10 ^ 3 J/(kg ·°C), and a density of 1.8 g/cm$^3$.

Temperature loss model of aluminum and magnesium in air per unit volume of temperature: assuming that the volumes are all 1 and heating from 20°C to 400°C, then

$$Q6013 = Cm*\triangle T = 880*2.71*（400\text{-}20）= 906224 \text{ J,}$$

$$QAZ91D = Cm*\triangle T = 250*1.8*（400\text{-}20）= 171000 \text{ J,}$$

Heat capacity ratio per unit volume:

$$Q6013: QAZ91D = 906224: 171000 = 5.3: 1$$

Thermal conductivity:

$$K6013: KAZ91D=237: 72=3.3: 1$$

Ratio of cooling rates:
Q6013/K6013:QAZ91D/KAZ91D=5.3:3.3=1.61:1

According to the above-mentioned data, it can be known that magnesium alloys and aluminum alloys immediately begin to decrease in temperature when in contact with room temperature air. When the temperature of raw materials decreases, especially the temperature at the edge obviously decreases. When the temperature decreases, the plastic deformation ability of raw materials will be affected. The deformation resistance of metal increases, which results in more difficult deformation. When the temperature of the furnace is rapidly decreased, the movement of dislocations in the metal is hindered, which results in easy cracking when deformation occurs. This is followed by a build-up of residual stress, which may not be released in time if the temperature is not sufficient, thereby initiating a crack. In addition, the friction coefficient between the rollers and the metal may be increased at a low temperature, increasing the risk of surface tearing. Therefore, the temperature control is critical. By providing a heat insulation cover 400 between the outlet of the heating furnace 200 and the rolling equipment 300, so that the raw materials, particularly the aluminum material layer 120 and the magnesium material layer 130, are maintained at a temperature within an interval suitable for rolling during the course of travel between the outlet of the heating furnace 200 and the rolling equipment 300. In an embodiment of the present invention, as shown in FIG. 2, a heating device is provided in the heat insulation cover 400 for reheating the edges of the laminated material.

The edges of the laminated material are reheated by a heat source between the outlet end of the heating furnace 200 and the rolling equipment 300. In order to better maintain the temperature of the edge of the laminated material after exiting the heating furnace 200, a heating device is provided to reheat the travelling laminated material. The heating device is provided on both sides of the laminated material and arranged along the travelling direction of the material. The reheat of the heating device mainly aims at the edge of the laminated material and is as close as possible to the traveling laminated material strip. In addition, a sufficient safety distance is to be maintained so as to avoid damage to the heating device due to contact between the heating device and the strip. The heating device can use induction heating.

In an embodiment of the present invention, as shown in FIG. 1, a first groove is formed in a side of the magnesium material layer 130 after rolling. The aluminum material layer 120 is embedded in the first groove. A second groove is formed in a side of the aluminum material layer 120 facing away from the magnesium material layer 130. The titanium material layer 110 is embedded in the second groove.

In the composite formed after the laminated material is subjected to composite hot rolling by the rolling equipment 300, the aluminum material layer 120 and the magnesium material layer 130 thereof are U-shaped and are successively compositely wrapped on three sides of the titanium material layer 110. The composite coil uses the titanium material layer 110 as a base, and uses the titanium material layer 110 to provide high strength, high temperature resistance, and corrosion resistance performance. As a structural support, the aluminum material layer 120 and the magnesium material layer 130 wrap three sides of the titanium material layer 110 in a U shape. The aluminum material layer 120 and the magnesium material layer 130 are low in density and good in ductility, so that the composite has a light weight and a high strength. The titanium material layer 110 serves as a core corrosion-resistant layer, the aluminum material layer 120 (forming a protective film after oxidation), and the magnesium material layer 130 provide graded protection on the outer layer, which can form corrosion-resistant layered protection. The high electrical conductivity of the aluminum material layer 120 and the heat dissipation of the magnesium material layer 130 can improve the performance of the application thereof in an electronic product housing. When rolling composite, compared to full wrapping, the U-shaped design can reduce the risk of edge cracking and enhance bonding strength through interlayer plastic deformation. The use of composite coil can reduce the amount of titanium, and the use of more economical aluminum/magnesium for the outer layer can reduce the overall production cost.

In an embodiment of the present invention, before performing the step of laminating the titanium material layer 110, the aluminum material layer 120, and the magnesium material layer 130 successively to form a laminated material, the method for making the titanium aluminum magnesium metal layered composite coil further includes:

the titanium material layer 110, the aluminum material layer 120, and the magnesium material layer 130 are subjected to a roughening treatment so as to form roughened stripes on the surface;
the roughened titanium material layer 110, the aluminum material layer 120, and the magnesium material layer 130 are washed to remove the attachments on the surface.

In an embodiment of the present invention, the roughened stripes form a predetermined included angle with the lengthwise direction of the laminated material, wherein the predetermined included angle is 10-15°. The roughened stripes between the laminated surfaces of two adjacent materials are arranged in parallel. The thickness variation of the titanium material layer 110, the aluminum material layer 120, and the magnesium material layer 130 after roughening is controlled within ± 0.05 mm.

The roughening of the titanium material layer 110, the aluminum material layer 120, and the magnesium material layer 130 may increase the surface area of the bonding surfaces and promote mechanical interlocking and diffusion bonding between the materials. The parallel arrangement of the roughened stripes between the laminated faces of two adjacent materials in the present example allows for more points of contact to be formed during the compositing process, enhancing the mechanical interlocking effect. Parallel roughened stripes can make the deformation of materials more coordinated during rolling, reducing the problem of interface stress mismatch, and thus reducing the occurrence of delamination or cracks. Parallel roughened stripes form complementary concave convex structures during laminating, increasing the effective contact area through geometric matching (which can be improved by 20% to 30% compared to random patterns). The thickness variation of the titanium material layer 110, aluminum material layer 120, and magnesium material layer 130 after roughening is controlled within ± 0.05 mm. Keeping the thickness uniform can ensure the uniform stress of each layer during the compositing process, avoiding the poor bonding or uneven deformation caused by local over-thin or over-thick. The uneven thickness can lead to the warpage of the composite plate or the imbalance of residual stress distribution, and the flatness and dimensional stability of the finished product can be ensured after precise control. High-dimensional accuracy helps to reduce the amount of subsequent processing and improve the consistency and yield of the product. Furthermore, the design of 10-15° included angle can optimize the interaction between rolling direction and roughened strips, avoid the problem that the vertical roughened strip (0°) is easy to be rolled and flattened during rolling, and avoid the stress concentration and interface slip caused by large-angle roughened strips (e.g. above 45°). In an embodiment of the present invention, the laminated material is subjected to an argon gas atmosphere in both the heating furnace 200 and the heat insulation cover 400, and the temperature fluctuation in the heating furnace 200 is controlled within ± 10°C, so that the temperature in the heating furnace 200 is uniformly controlled.

In an embodiment of the present invention, the laminated material is rolled in the rolling equipment 300 using an asynchronous speed ratio to obtain a composite metal strip. A lower roller of the rolling equipment 300 is used for rolling the magnesium material layer 130, an upper roller of the rolling equipment 300 is used for rolling the titanium material layer 110, and the ratio of the linear velocity $V_1$ of the lower roller to the linear velocity $V_2$ of the upper roller is 1.05-1.3: 1. In the rolling process, the reduction is 20-50%, the output speed of the composite metal strip is 5-13 m/min, and the roller speed is controlled at V ± 0.1 m/min.

The effect of using a higher-speed lower roller to roll the magnesium material layer 130 is to introduce a controlled residual stress by asynchronous rolling, and to achieve automatic straightening by stress relief during cooling, thereby reducing the cost and time of the subsequent straightening procedure. Asynchronous rolling refers to the rotation of the upper and lower rollers at different linear speeds, resulting in unequal deformation of the upper and lower surfaces of the material during rolling, thereby generating shear stress within the material. During cooling, due to material shrinkage and release of residual stress, the original bending can be counteracted, resulting in a flat material. After asynchronous rolling, the material presents initial curvature ($C_0$), and the residual stress in the material will cause bending. When cooling, the shrinkage rate of the outer layer (magnesium/aluminum) is faster than that of the inner layer (titanium), and the reverse thermal stress is generated. After the reheating of rolling residual stress and thermal stress, the total stress is lower than the yield strength of the material, and the material is straightened automatically under the elastic action.

Dynamic regulation of the rate of curving:

$$C_0 = K \times (V_1/V_2 - 1) \times (h/R)$$

K: material coefficient (take 0.12-0.18 for titanium aluminum magnesium composite plate);
h: total thickness (mm);
R: roller radius (mm).

Target rate of curving: set $C_0$ = 1.2%-2.5%/m (ensure the straightening allowance after cooling) In view of the above, the function of rolling the magnesium material layer 130 using the lower roller with a higher speed is as follows: the magnesium material layer 130 can be induced to generate significant shear flow, which promotes the mechanical interlock with the aluminum material layer 120, absorbs the rolling energy through the plastic deformation of the magnesium material layer 130, and reduces the concentration of the interfacial stress of the titanium material layer 110.

In an embodiment of the present invention, prior to the step of roughening the titanium material layer 110, the aluminum material layer 120, and the magnesium material layer 130, the method for making a titanium aluminum magnesium metal layered composite coil further includes: the titanium material layer 110, the aluminum material layer 120, and the magnesium material layer 130 are subjected to deoiling and washing.

In an embodiment of the present invention, prior to performing the step of conveying the heated laminated material to the rolling equipment 300 for composite hot rolling, the method for making a titanium aluminum magnesium metal layered composite coil further includes:

The rollers of the rolling equipment 300 are preheated so that the temperature of the rollers is ≥60°C.

In an embodiment of the present invention, while performing the step of conveying the heated laminated material to the rolling equipment 300 for composite hot rolling, as shown in FIG. 2, the method for making the titanium aluminum magnesium metal layered composite coil further includes:

lubricant is applied to the interface of the laminated material and the rollers during rolling.

In particular, the lubricant is applied to the contact surface of the laminated material with the rollers during the rolling process. Each time the lubricant is calibrated, and the action of the lubricant during the rolling process includes reducing the friction between the rollers and the material, so as to reduce the rolling force, prevent the temperature rise, prevent the adhesion of the material to the rollers, and provide the advantage of improving the surface quality of the product.

When the temperature of the rollers reaches 85°C during the rolling process, the rollers are cooled.

Specifically, the temperature of the rollers is controlled to be ≥60°C by preheating the rollers before starting the rolling. Cooling is turned on when the temperature is raised to 85°C during the rolling, and the roller temperature is maintained at 80±20°C. Preheating the equipment can reduce the thermal stress. As a metal component, if the rollers suddenly experience high temperature rolling in a cold state, it may affect the uniformity of product rolling thickness due to uneven thermal expansion.

In an embodiment of the present invention, a method for making the titanium aluminum magnesium metal layered composite coil according to the present invention uses a dynamic thermometry method. Three layers of materials are used to make a material head, and thermometry equipment is provided on the material head. Multiple passes are made through a heating furnace 200 at a speed of V ± 0.1 m/min. The maximum temperature difference among the multiple thermometry results is not more than ± 10°C.

In an embodiment of the present invention, the circular run-out of the upper roller is within ± 0.05 mm, and the deviation of the center hole of the upper roller is within ± 0.02 mm. In use, the rollers are inspected regularly to maintain the surface finish, so as to avoid the occurrence of cracks in the composite product caused by pits or scratches.

According to the method for making a titanium aluminum magnesium metal layered composite coil provided in the present invention, heat transfer can be regulated by arranging a heat transfer gap between a titanium material layer and an aluminum material layer and/or between an aluminum material layer and a magnesium material layer. Due to the arrangement of the heat transfer gap, when heating the laminated material, a heat convection is formed in the heat transfer gap by means of the heat transfer gap, allowing the heat in the heating furnace to circulate and flow into the heat transfer gaps, resulting in a more even temperature distribution at the edges and inside of the raw materials, and allowing the surfaces of each raw material to be uniformly heated.

Finally, it should be noted that the embodiments above are only used to illustrate the technical solution of the present invention and not to limit it. Although the present invention has been described in detail with reference to the aforementioned various embodiments, ordinary technical personnel in the art should understand that they can still modify the technical solutions recorded in the aforementioned embodiments, or equivalently replace some technical features. These modifications or substitutions do not separate the essence of the corresponding technical solutions from the spirit and scope of the technical solutions of the various embodiments of the present invention.

**Claims**

1. A method for making a titanium aluminum magnesium metal layered composite coil, **characterized by** comprising:

   laminating a titanium material layer, an aluminum material layer, and a magnesium material layer successively to form a laminated material, heating the laminated material to the first preset temperature by a heating furnace, wherein there is a heat transfer gap between the titanium material layer and the aluminum material layer and/or the aluminum material layer and the magnesium material layer;
   conveying the heated laminated material to a rolling equipment for composite hot rolling.

2. The method for making the titanium aluminum magnesium metal layered composite coil according to claim 1, **characterized in that** a temperature sensor is provided in the heating furnace and is configured to sense a temperature in the heat transfer gap.

3. The method for making the titanium aluminum magnesium metal layered composite coil according to claim 1, **characterized in that** the heat transfer gap is gradually reduced from entering the heating furnace to the rolling equipment.

4. The method for making the titanium aluminum magnesium metal layered composite coil according to claim 1, **characterized in that** first preset temperature is 250-600°C.

5. The method for making the titanium aluminum magnesium metal layered composite coil according to claim 1, **characterized in that** a heat insulation cover is provided between an outlet of the heating furnace and the rolling equipment.

6. The method for making the titanium aluminum magnesium metal layered composite coil according to claim 5, **characterized in that** a heating device is provided in the heat insulation cover for reheating the edges of the laminated material.

7. The method for making the titanium aluminum magnesium metal layered composite coil according to any one of claims 1 to 6, **characterized in that** a first groove is formed in a side of the magnesium material layer after rolling; the aluminum material layer is embedded in the first groove; a second groove is formed in a side of the aluminum material layer facing away from the magnesium material layer, and the titanium material layer is embedded in the second groove.

8. The method for making the titanium aluminum magnesium metal layered composite coil according to claim 7, **characterized in that**, before the step of laminating a titanium material layer, an aluminum material layer, and a magnesium material layer successively to form a laminated material, the method further comprises:

   roughening the titanium material layer, the aluminum material layer, and the magnesium material layer so as to form roughened stripes on the surface; and
   washing the titanium material layer, the aluminum material layer, and the magnesium material layer after the roughening treatment to remove attachments on the surface.

9. The method for making the titanium aluminum magnesium metal layered composite coil according to claim 8, **characterized in that** the roughened stripes form a predetermined included angle with the lengthwise direction of the laminated material; the predetermined included angle is 10-15°; the roughened stripes between the laminated surfaces of two adjacent materials are arranged in parallel; the thickness variation of the titanium material layer, the aluminum material layer, and the magnesium material layer after roughening is controlled within $\pm$ 0.05 mm.

10. The method for making the titanium aluminum magnesium metal layered composite coil according to claim 9, **characterized in that** the laminated material is subjected to an argon gas atmosphere in both the heating furnace and the heat insulation cover, and the temperature fluctuation in the heating furnace is controlled within $\pm$ 10°C.

11. The method for making the titanium aluminum magnesium metal layered composite coil according to claim 10, **characterized in that** the laminated material is rolled in the rolling equipment using an asynchronous speed ratio to obtain a composite metal strip; wherein a lower roller of the rolling equipment is used for rolling the magnesium material layer, an upper roller of the rolling equipment is used for rolling the titanium material layer, and the ratio of the linear velocity $V_1$ of the lower roller to the linear velocity $V_2$ of the upper roller is 1.05-1.3: 1; the reduction during rolling is 20-50% and the output speed of the composite metal strip is 5-13 m/min.

12. The method for making the titanium aluminum magnesium metal layered composite coil according to claim 11, **characterized in that** prior to the step of roughening the titanium material layer, the aluminum material layer, and the magnesium material layer, the method further comprises:
deoiling and cleaning the titanium material layer, the aluminum material layer, and the magnesium material layer.

13. The method for making the titanium aluminum magnesium metal layered composite coil according to claim 11, **characterized in that** prior to the step of conveying the heated laminated material to a rolling equipment for composite hot rolling, the method further comprises:
preheating the rollers of the rolling equipment to ensure that the temperature of the rollers is ≥ 60°C.

14. The method for making the titanium aluminum magnesium metal layered composite coil according to claim 11, **characterized in that** while performing the step of conveying the heated laminated material to a rolling equipment for composite hot rolling, the method further comprises:

   applying a lubricant to a contact surface of the laminated material and the rollers during rolling; and

when the temperature of the rollers reaches 85°C during rolling, cooling the rollers.

15. The method for making the titanium aluminum magnesium metal layered composite coil according to claim 14, **characterized in that** the circular run-out of the upper roller is within $\pm 0.05$ mm, and the deviation of the center hole of the upper roller is within $\pm 0.02$ mm.

FIG. 1

FIG. 2

## INTERNATIONAL SEARCH REPORT

| International application No. |
|---|
| **PCT/CN2025/082014** |

**A. CLASSIFICATION OF SUBJECT MATTER**

B21B1/38(2006.01)i

According to International Patent Classification (IPC) or to both national classification and IPC

**B. FIELDS SEARCHED**

Minimum documentation searched (classification system followed by classification symbols)

IPC: B21B

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT: 钛, 铝, 镁, 叠合, 叠轧, 层叠, 复合, 加热炉, 预热, 传热间隙, 导热间隙, 毛化, 打磨, 异步, 润滑, 补热, titanium, aluminum, magnesium, roll+, brush+, rough+, heat+, furnace, asynchronous

**C. DOCUMENTS CONSIDERED TO BE RELEVANT**

| Category* | Citation of document, with indication, where appropriate, of the relevant passages | Relevant to claim No. |
|---|---|---|
| Y | CN 104014589 A (YANSHAN UNIVERSITY) 03 September 2014 (2014-09-03) description, paragraphs [0004]-[0012] | 1-15 |
| Y | CN 105149354 A (LU SENKAI et al.) 16 December 2015 (2015-12-16) description, paragraphs [0003]-[0021], and figure 1 | 1-15 |
| A | CN 109675926 A (JILIN UNIVERSITY) 26 April 2019 (2019-04-26) entire document | 1-15 |
| A | CN 109201739 A (CENTRAL SOUTH UNIVERSITY) 15 January 2019 (2019-01-15) entire document | 1-15 |
| A | JP S63174791 A (SUMITOMO METAL INDUSTRIES, LTD. et al.) 19 July 1988 (1988-07-19) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 April 2025** | **11 June 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2025/082014**

| Patent document cited in search report | | | Publication date (day/month/year) | Patent family member(s) | | | Publication date (day/month/year) |
|---|---|---|---|---|---|---|---|
| CN | 104014589 | A | 03 September 2014 | CN | 104014589 | B | 15 February 2017 |
| CN | 105149354 | A | 16 December 2015 | CN | 105149354 | B | 10 October 2017 |
| CN | 109675926 | A | 26 April 2019 | None | | | |
| CN | 109201739 | A | 15 January 2019 | CN | 109201739 | B | 10 April 2020 |
| JP | S63174791 | A | 19 July 1988 | JP | H0747228 | B2 | 24 May 1995 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011519856